# EUROPEAN PATENT SPECIFICATION

(11) **EP 4 610 705 B1**
(45) Date of publication and mention of the grant of the patent: **21.10.2026**
(21) Application number: 24160923.9
(22) Date of filing: 01.03.2024
(51) Int. Cl.: G02B 7/02, G02B 13/14

(54) **A LENS ASSEMBLY, A LENS UNIT HOLDER FOR A LENS ASSEMBLY AND A METHOD FOR PROVIDING A LENS UNIT FOR THE LENS ASSEMBLY**
LINSENANORDNUNG, LINSENEINHEITSHALTER FÜR EINE LINSENANORDNUNG UND VERFAHREN ZUR BEREITSTELLUNG EINER LINSENEINHEIT FÜR DIE LINSENANORDNUNG
ENSEMBLE LENTILLE, SUPPORT D'UNITÉ LENTILLE POUR ENSEMBLE LENTILLE ET PROCÉDÉ DE FOURNITURE D'UNITÉ LENTILLE POUR L'ENSEMBLE LENTILLE

(43) Date of publication of application: 03.09.2025
(73) Proprietor: Deutsches Elektronen-Synchrotron DESY, 22607 Hamburg (DE)
(72) Inventor: Seiboth, Frank, 22598 Hamburg (DE); Döhrmann, Ralph, 21360 Vögelsen (DE)
(74) Representative: Bird & Bird LLP - Hamburg

(56) References cited:
- EP-A1- 3 637 754
- EP-A2- 0 230 277
- WO-A1-2008/119386
- WO-A1-2015/119571
- KR-A- 20060 068 611
- US-A1- 2010 284 077
- US-A1- 2011 026 144
- US-A1- 2013 176 625
- US-A1- 2018 031 741
- US-B1- 7 688 531

## Description

The present invention relates to a lens assembly, a lens unit holder for a lens assembly and a method for providing a lens unit for the lens assembly.

In the realm of optical systems, the effective integration of multiple lens elements is crucial for achieving desired optical performance, particularly in scenarios where lenses exhibit low refraction, such as, e.g., in the case of X-rays, and where minimal installation space is desired.

A traditional method for manufacturing lenses, including those made from specialized materials like beryllium and aluminum for, e.g., X-ray applications, involves a stamping or molding process that utilizes a precision-engineered mold with a negative form of the desired lens shape. In this process, a block or plate of the respective material is first prepared and then heated to a temperature that makes it malleable, ready to be shaped. The heated material is then pressed into or against the mold, which imprints the negative form onto the material, effectively shaping the lens. After molding, the lens undergoes a cooling phase, where it solidifies while retaining the new shape. This may be followed by a series of finishing steps, including machining, grinding, and polishing, to achieve the required optical specifications and surface finish. A drawback of this stamping or molding process is that it may introduce imperfections due to variations in material behavior during heating and cooling, limitations in mold precision, uneven force applied to the stamp, and the inherent difficulties in achieving perfect uniformity and surface smoothness, which causes optical aberrations. These factors can result in lenses that, while suitable for many applications, may not meet the highest standards required for the most demanding optical applications. Relevant prior art can be found in patent document EP 0 230 277 A2 (1987-07-29), disclosing an assembly for photolithography comprising cells, each with internal flexure members to hold an individual lens in the cell in given spatial relation to the cell wall and top and bottom surfaces, and returning the lens to the required position following a temperature excursion from a datum value.

Optical aberrations are deviations from the ideal imaging properties of optical systems, leading to distortions or blurring in the images produced. These aberrations arise from the inherent limitations of the lens design, material properties, and manufacturing processes, which prevent light rays from converging perfectly at a single point or plane. Common types of aberrations include spherical aberration, chromatic aberration, coma, astigmatism, and field curvature. One cause of aberrations is lenses with imperfect surfaces, which can occur during manufacturing processes such as stamping, as described above. Imperfect surfaces can also occur with lenses manufactured using a laser ablation method, although the precision and control afforded by laser ablation typically result in fewer and less severe imperfections. Laser ablation allows for more accurate shaping of the lens surface, reducing the likelihood of aberrations but not eliminating them entirely. While polishing can correct some surface imperfections, it cannot always compensate for deeper irregularities that significantly affect the optical performance of the lens. Regardless of the manufacturing technique, addressing and correcting aberrations is a critical aspect of optical system design, often requiring the use of additional corrective elements or sophisticated design strategies to achieve the desired image quality.

Lenses or lens elements, integral to a wide range of optical systems, serve the function of focusing or modifying light rays and other types of radiation, such as high-energy electromagnetic radiation, i.e., X-rays or gamma rays. These lens elements are crafted from a variety of materials, each selected for its specific properties to match the intended application. For visible light applications, materials like glass or various types of plastics are commonly used due to their transparency and ability to refract light effectively. These materials are chosen for their clarity, refractive indices, and durability, allowing for precise control over light beams for tasks ranging from simple magnification to complex image formation. In contrast, for applications involving other types of radiation, materials such as beryllium, aluminum, silicon, germanium, or diamond are preferred. These materials are selected not for their transparency to visible light but for their unique interaction with, for example, X-rays or IR (infrared). While, e.g., beryllium is largely opaque to visible light, it possesses low absorption characteristics for high-energy electromagnetic radiation, making them effective for focusing or collimating high-energy electromagnetic beams without significant loss of intensity. Beryllium, with its low atomic number, and diamond, known for its robustness and thermal properties, stand out for their ability to minimize high-energy electromagnetic radiation absorption and withstand the rigors of high-energy environments.

However, due to the fact that the refractive index for high-energy radiation such as X-rays is close to 1, lens stacking techniques are employed in which multiple - e.g., plate-shaped - lens elements are provided in a stack to be able to achieve a lens arrangement having the required refractive properties. Conventionally, for every lens element an individual thick lens mount was provided. The lenses with the individual lens mounts were assembled on a V-groove rail, allowing rotational adjustments to compensate for manufacturing tolerances. However, these methods are inherently limited by the precision achievable through mechanical manufacturing processes, particularly evident in the fabrication of beryllium and aluminum lenses.

Moreover, the integration of corrective optics into such lens assemblies has posed significant challenges. Existing methods often require additional kinematic mechanisms to accommodate corrective elements, leading to increased complexity and bulkiness along the optical path. Furthermore, the need for thick lens mounts exacerbates the spatial constraints in optical systems, hindering compact design solutions.

With lens assemblies it is therefore generally desirable to provide a lens assembly and a lens assembly method that enhances overall optical performance while minimizing installation space. In particular, a lens assembly including a lens unit and a method for providing such a lens unit is desirable that leverages advanced manufacturing techniques and precise alignment methodologies to achieve unparalleled accuracy in lens stacking, eliminating the need for cumbersome additional kinematics.

Therefore, an object of the present invention is to provide a lens assembly and a method for providing a lens assembly that not only minimizes installation space but also ensures ease of assembly, high precision, and modularity.

According to a first aspect of the present invention, the object is solved by a lens assembly comprising the features of claim 1. Therefore, a lens assembly comprising a plurality of lens units is provided, wherein each lens unit comprises a respective plurality of lens plates being stacked directly onto each other to form a lens plate stack. Each of the lens units further comprises a separate lens unit holder being configured to hold the lens plate stack of the respective lens unit. Each lens plate comprises a first lens, wherein the first lens comprises a first optical axis. The first optical axis of each first lens is arranged along a first common optical axis. Lastly, the plurality of lens units are arranged such that the first common optical axes of the plurality of lens units are coincident.

Thus, the lens assembly comprises a plurality of lens units. The lens units can be understood as sub-units of the lens assembly, wherein the lens units can be identical, i.e., by comprising the same amount of lens plates. This yields the advantage that the identical lens units can be very easily combined to a lens assembly comprising a plurality of lens units without the need of measuring or adjust the lens units or the lens assembly, resulting in easy assembly. Identical lens units can be aligned easily, as the parameters for optimal performance are the same for all lens units. This can reduce the complexity of the setup and potentially increase the stability and reproducibility of the lens assembly.

The lens units can also differ from each other, i.e., by a differing amount of lens plates. Combining different lens units could increase the flexibility of the setup of the lens assembly, allowing for adjustable magnification and focus depending on the experimental requirements. For example, the lens assembly could be configured to switch between different resolutions or focal lengths by exchanging at least one of the lens units by a lens unit with more or less lens plates.

Each lens unit comprises a plurality of lens plates being stacked directly onto each other, preferably without an individual lens plate holder, to form a lens plate stack. Stacking the plurality of lens plates directly onto each other to form a lens plate stack refers to placing the plurality of lens plates in direct contact with one another without any intervening space or material between them. This means that the extended surfaces of adjacent lens plates touch each other, creating a single, continuous stack of lens plates. This eliminates air gaps and any other form of separation that might typically exist if the components were placed in individual holders or separated by spacers. The direct contact aims to enhance the optical pathway's efficiency and consistency, that can ensure that light or other forms of radiation pass through the stacked materials with minimal distortion, reflection, or loss of intensity. With the lens plate stack, it can be possible to facilitate the benefit to simplify the optical assembly, improve the system's compactness, and potentially increase the quality of the transmitted image or signal by reducing aberrations and enhancing transmission efficiency.

A lens plate stack describes an assembly of lens plates organized systematically, where each lens plate is positioned either directly above or beside another, forming a coherent structure. This assembly process can result in either a vertical stack, with lens plates stacked one on top of another, or a horizontal stack, where plates are aligned side by side. Once assembled, the orientation of the lens plate stack-whether initially vertical or horizontal-is not fixed; it can be reoriented as needed for specific applications. This means a vertically assembled stack can be placed horizontally, and vice versa, without compromising its functionality as a stack. This approach to stacking and reorienting the lens plate stack allows for a high degree of flexibility in assembling the lens unit.

The lens units further comprise a lens unit holder being configured to hold the lens plate stack. The lens unit holder acts as a structural component designed to hold and secure the lens plate stack, preventing the lens plate stack from disassembling. Importantly, the lens plate stack is considered a stack of lens plates even in the absence of any adhesive or binding material, such as glue, to physically hold the lens plates together. The lens plates maintain their stacked configuration through careful placement and external support, such as the lens unit holder, without the need for permanent bonding. This distinction emphasizes the lens plates stack's and the lens unit holder's modular and flexible nature, allowing for easy adjustment, maintenance, or reconfiguration of the lens unit according to changing requirements or maintenance. Such a non-permanent assembly can enhance the lens assembly's adaptability and longevity.

The lens unit holder ensures that each lens plate within the lens plate stack remains in its correct position, maintaining the desired optical alignment and functionality of the system. Preferably, the lens unit holder is made of a material that matches the thermal expansion of the lens plates. This compatibility can be relevant for ensuring that the entire lens unit and lens assembly expands and contracts uniformly in response to temperature changes, thereby being able to minimize the risk of optical distortions, misalignments, or mechanical stresses that could compromise the performance.

Each lens plate comprises a first lens, wherein the first lens comprises a first optical axis. This first lens is characterized by a first optical axis, that represents the central line along which light or other rays travel through the lens. The optical axis determines the path of the rays as they enter, pass through, and exit the lens, guiding the design and alignment of the lens plate to ensure that the rays are correctly focused or directed.

For each lens unit, the first optical axis of each first lens is arranged along a first common optical axis. In the lens unit comprising multiple lens plates, each with its own first lens characterized by a first optical axis, these individual optical axes are meticulously aligned along the first common optical axis. This alignment can ensure that the entire lens unit functions cohesively, directing rays along a singular, well-defined path through the lens unit. The concept of a first common optical axis represents the central axis of the first lenses of the plurality of lens plates. By arranging the first optical axis of each lens along the first common optical axis, the lens unit enables that rays can travel efficiently and uniformly through each lens plate, being able to maintain the desired optical characteristics such as focus, intensity, and image quality. This alignment can minimize optical aberrations and maximize the assembly's overall performance.

In a preferred embodiment, each of the lens plates of the lens unit comprises a plurality of lenses, which includes the first lens, to provide a lens array. Each one of the plurality of lenses is characterized by its own optical axis. The plurality of lenses within each lens plate are arranged such that each lens aligns with the corresponding lenses of the other lens plates, ensuring that for every lens within the lens array, all lenses across the plurality align on a common optical axis. Incorporating a lens array on a single lens plate, as opposed to having just the first lens, opens up the possibility of arranging multiple lenses in a precise pattern on a single lens plate, creating a composite optical element that can provide a plurality of optical paths. Such an array can significantly enhance the system's ability to capture, focus, or distribute light across a wider field of view or increase resolution and sensitivity in imaging applications.

Lastly, the plurality of lens units are arranged such that the first common optical axes of the plurality of lens units are coincident. This means that the central optical pathway, or the primary axis along which rays are directed through each lens unit, is aligned across all the lens units within the lens assembly. When each one of the plurality of lens units, features a plurality of lenses, the lens units are aligned such that the optical axis of each lens across all units is arranged to be coincident, ensuring uniform alignment throughout the entire assembly. Achieving coincidence of the first common optical axes can be fundamental to ensuring that rays pass through the plurality of lens units of the lens assembly in a seamless, uninterrupted manner, maintaining a consistent focal point and optical quality from one lens unit to the next. As a result, the plurality of lens units can preferably be aligned such that all lens plate stacks of the plurality of lens units form a continuous common lens plate stack.

By aligning the first common optical axes of all lens units, the design allows for individual lens units to be easily exchanged, added, or removed with reducing the risk of disrupting the overall optical performance. As long as the new or replacement lens units share the same coincident first common optical axis, they can be integrated into the lens assembly with minimal adjustment. This capability for easy modification ensures that the lens assembly can be quickly adapted to meet changing requirements or due to maintenance.

The combination of a lens plate stack and a lens unit holder offers significant advantages, particularly in terms of space efficiency and ease of alignment, when compared to lens assemblies where each lens is mounted in its own individual holder. By stacking lens plates directly and securing them within a lens unit holder, the overall footprint of the optical system is minimized. Additionally, aligning a stack of lenses becomes considerably simpler when they are collectively housed. Instead of adjusting each lens within its own holder to achieve the desired optical alignment the use of multiple lens units each including a single holder for the entire lens plate stack including a plurality of lens plates allows for a unified approach to alignment. This not only speeds up the assembly process but also enhances the precision and reproducibility of the optical setup.

Additionally, the lens assembly and the lens units, each equipped with their own individual lens unit holder, are designed to be compatible with a legacy lens holder featuring a V-groove rail system as known from the prior art. Such compatibility ensures that these modern lens units can be seamlessly integrated into the legacy lens holder, allowing for fine-tuning and optimization of the optical assembly. This adaptability not only enhances the performance of the lens assembly by ensuring optimal alignment but also preserves the utility and extends the lifespan of existing optical systems by incorporating the lens assembly into the legacy holder. Consequently, this streamlined configuration facilitates the creation of highly efficient and accurate optical systems, suitable for a wide range of advanced applications.

With other words, by providing a lens assembly comprising a plurality of lens units, each of the lens units comprising a plurality of lens plates, it is possible to align the plurality of lens plates in the lens units to provide a complete, aligned, robust and compact lens unit that can easily be combined with other lens units to form the lens assembly. The modular approach serves the benefit that each lens unit aligns and holds a subgroup of the plurality of lens plates that is needed for the lens assembly. Therefore, it is no longer needed to hold each lens plate individually with a kinematic mechanism to accommodate corrective elements. Additionally, the lens assembly can be used with legacy lens holders leading to a modular design being backward compatible to legacy optical systems.

In summary a lens assembly is provided, which can not only minimize installation space but also ensures ease of assembly, high precision, and modularity.

According to a preferred embodiment of the lens assembly, for each of the lens unit one of the lens plates is a corrective lens plate, wherein the first lens of the corrective lens plate is a first corrective lens adapted to correct aberrations of the first lenses of the remaining lens plates. Providing a corrective lens plate for a lens unit that holds fewer lens plates, compared to the total amount of lens plates used for the lens assembly, is easier, as a smaller number of lens plates provide less aberrations simplifying the correction process. By introducing a corrective lens plate into the lens unit, it becomes feasible to create a lens unit that is not only complete and corrected for optical aberrations but also modular, facilitating easy integration with other lens units to build complex optical systems. This modular design principle means that each lens unit is equipped with its own corrective lens plate, tailored to correct specific aberrations inherent to that lens unit. Such an arrangement ensures that every individual lens unit can deliver optimal optical performance, with sharply focused, aberration-free images. The modularity aspect can particularly be advantageous, as it can allow for straightforward combination and reconfiguration of different lens units to suit varying application needs, without the necessity for extensive redesign or adjustment.

Preferably, the corrective lens plate will be placed individually in the lens place holder, especially independent of the lens plate stack, for example after placing the lens plate stack in the lens unit holder. This offers the benefit that the lens plate stack can be placed in the lens unit holder and the aberrations of the lens plate stack can be measured using the lens unit holder with the lens plate stack. The independent corrective lens plate can then be created according to the measured aberrations and placed in the lens unit holder without the need of realigning or repositioning the lens plate stack in the lens unit holder.

The approach of providing a corrective lens plate significantly enhance the flexibility and scalability of the lens assembly, enabling the creation of highly customized setups that can be dynamically adjusted or expanded by simply adding or exchanging lens units. Each unit's inherent correction and completeness ensure that, regardless of the configuration, the overall lens assembly maintains high-quality optical performance.

According to a preferred embodiment of the lens assembly, the first corrective lens is an aspherical lens. An aspherical corrective lens offers significant advantages in optical systems by precisely addressing and correcting optical aberrations. The unique feature of an aspherical lens is its non-uniform, complex surface curvature, which allows it to focus rays to a single point with greater accuracy, thereby significantly reducing spherical aberration and other distortions like coma and astigmatism. This can lead to markedly improved image quality, with sharper, clearer images across a wider field of view. Moreover, an aspherical corrective lens allows for simpler first lenses of the lens plate stack, resulting in an easy and cost-effective manufacturing of the lens units and lens assembly.

According to a preferred embodiment the lens assembly further comprises a lens assembly holder being arranged to receive the plurality of lens units and to align the lens units such that the first common optical axes of the plurality of lens units are coincident. As previously mentioned, the lens assembly holder can be a legacy lens holder being used to hold lenses comprising an individual lens mount. The lens assembly holder, designed to ensure precise alignment and compatibility of the plurality of lens units, can be crafted from a range of materials and incorporate several structural features to achieve the alignment of the lens units. The choice of material for the lens assembly holder can mirror that of the lens units and the lens unit holder of the lens units or is selected for its complementary properties, such as thermal expansion compatibility, durability, and ease of manufacturing. Common materials include metals like aluminum, stainless steel, copper, or alloys known for their strength and stability and their thermal conductivity, or advanced polymers and composites, valued for their lightweight and corrosion-resistant characteristics. Additionally, the lens assembly holder can include a rail or a rack system, which provides a straightforward yet precise means of arranging and securing the lens units. A rail system, for example, could feature a groove or dovetail design, allowing lens units to be slid into place and then locked down, facilitating easy adjustments along one axis. This is particularly useful for ensuring the first common optical axes of all lens units are coincident. Alternatively, a rack system might offer more fixed positions for lens units, with slots or receptacles designed to match the specific dimensions of each lens unit, providing a secure fit and precise positioning. Adjustment mechanisms, such as screws, levers, clamps, springs, or knobs, may be incorporated to fine-tune the position and orientation of each lens unit within the lens assembly holder, allowing for axial alignment. This flexibility can serve for compensating manufacturing tolerances and achieving optimal optical alignment. As a result, the lens assembly holder receives the plurality of lens units and aligns the lens units such that the plurality of lens plate stacks of the plurality of lens units form a continuous common lens plate stack.

According to a preferred embodiment of the lens assembly, each lens unit further comprises at least one locking plate being fixedly attached to the lens unit holder on a first end of the lens unit holder. The locking plate can be adapted to secure the lens plate stack within the lens unit holder and holding the lens plate stack firmly in place in an axial direction along the first common optical axis. To achieve this the locking plate can be in contact with the lens plate stack when attached to the lens unit holder. By doing so, it can effectively prevent any movement of the lens plates or the lens plate stack, as well as the risk of any lens plate accidentally falling out of the lens unit holder.

In this preferred embodiment, it is further preferred if the lens unit comprises two locking plates, one on each end of the lens unit holder. The two locking plates can be adapted to secure the lens plate stack within the lens unit holder and holding the lens plate stack firmly in place in both axial directions along the first common optical axis. To achieve this the two locking plates can be in contact with the lens plate stack at each side of the lens plate stack when attached to the lens unit holder. By doing so, it can effectively trap the lens plate stack in the lens unit holder to prevent any movement of the lens plates or the lens plate stack, as well as the risk of any lens plate accidentally falling out of the lens unit holder.

According to a preferred embodiment of the lens assembly, each lens unit further comprises at least one attachment element to fixedly couple the lens unit to another lens unit. The attachment element is adapted to physically couple a lens unit to another lens unit and to fixedly hold it in place, preferably aligned along the first common optical axis, so that a movement of both lens units relative to each other will be prevented. The attachment element may take various forms, including clamps, springs, screws, bayonet mounts, or magnetic couplings, each chosen based on the specific requirements of the lens assembly, including the need for quick assembly/disassembly, vibration resistance, and long-term stability. The attachment element can also be designed to allow for slight adjustments to be made post-assembly, ensuring that the lens units can be fine-tuned to achieve perfect alignment along the common first optical axis. By enabling the fixed coupling of lens units in a manner that aligns them accurately along a shared optical axis, the attachment element ensures that rays travel through the lens assembly as intended, with minimal loss or distortion. This is relevant for applications requiring high precision, where the quality of the optical output directly depends on the precise alignment of all optical components.

According to a second aspect of the present invention, the object is solved by a lens unit holder comprising the features of claim 7. Therefore, a lens unit holder for a lens assembly according to the first aspect of the present invention is provided. The lens unit holder is configured to hold a plurality of lens plates and comprises a lens unit holder body adapted to receive a lens plate stack formed by directly stacking the plurality of lens plates one on top of the other. The lens unit holder further comprises a lens unit holder cover adapted to being fixedly coupled to the lens unit holder body. The lens unit holder body and the lens unit holder cover are adapted to be fixedly coupled to each other to fixedly hold the lens plate stack.

Thus, the lens unit holder is configured to hold a plurality of lens plates and comprises a lens unit holder body adapted to receive a lens plate stack formed by directly stacking the plurality of lens plates one on top of the other. The lens unit holder body can form the main enclosure, providing structural support and precise positioning for the lens plate stack. It can comprise features such as alignment guides, seats for the lens plates, and adjustable components for fine-tuning the lens plate stack position. The lens unit holder body can be designed to receive the lens plate stack in such a way that it comprises at least one corresponding mating surface matching at least one outer surface of the lens plate stack. This ensures that the lens plate stack will be placed correctly in the lens unit holder body, and it serves the benefit to correctly align or keep the lens holder stack aligned when being placed in the lens unit holder body.

The lens unit holder further comprises a lens unit holder cover adapted to being fixedly coupled to the lens unit holder body. A fixedly coupling implies a secure and permanent connection that ensures the integrity and stability of the enclosure. This connection can be achieved through a form-fit connection that relies on the geometric compatibility between the lens unit holder cover and the lens unit holder body, where the shapes of the connecting elements are designed to interlock with each other. This type of connection is inherently stable and does not depend on external forces or attachment elements to maintain the attachment. Alternatively, the connection can be achieved by a force-fit connection that depends on the application of force to maintain the connection between the lens holder cover and the lens holder body. This could involve tension, compression, or friction forces that hold the components together. The precision of the form-fit can ensure that once engaged, the lens unit holder cover and lens unit holder body are securely attached, mitigating the risk of accidental separation, and providing increased protection for the lens plate stack. Force-fit connections are advantageous for their simplicity and ease of assembly and disassembly, allowing for quick access to the lens unit interior while still providing a secure closure.

The lens unit holder body and the lens unit holder cover are adapted to be fixedly coupled to each other to fixedly hold the lens plate stack. A fixed attachment ensures that once the lens plate stack is positioned in the lens unit holder body and the lens unit holder cover is attached to it, the lens plate stack remains stable, preserving the optical alignment. The fixed attachment of the lens holder body and lens holder cover is designed in such a manner that the lens unit is suitable for use in vacuum environments. This design choice ensures that the lens unit can be effectively used in applications where a vacuum is required, without compromising the structural integrity or functionality of the lens unit. Preferably, the lens unit holder comprises a sealing element such that when the lens unit holder cover is attached to the lens unit holder body, the sealing element seals the enclosure, resulting in an airtight and secure connection of the lens unit holder.

Further preferably, the lens unit holder cover can be arranged on the lens unit holder body by partially placing the lens unit holder cover on the lens unit holder body and axially shifting both components to fixedly attach them to each other. This approach allows for a straightforward yet secure method of attachment, where one component (either the lens unit cover or the lens unit body) can feature a rail or a grooved path, and the other has a corresponding projection or a protruding element designed to fit into the groove. By partially placing the lens unit holder cover onto the body and then axially (along the axis) shifting the components relative to each other, the projection slides into the rail. This movement enables the components to interlock, effectively securing the cover to the body without the need for additional fastening mechanisms such as screws or adhesives. This design not only facilitates ease of assembly and disassembly but also ensures a firm and stable connection that protects the internal components, such as lens plates, from external environmental factors and mechanical disturbances.

According to a preferred embodiment, the lens unit holder comprises at least one elastically deformable biasing element being configured to exert a biasing force on the lens plate stack. The elastically deformable biasing element is designed to apply a consistent biasing force on the lens plate stack to maintain its position and alignment within the lens unit holder. The elastically deformable biasing element leverages the properties of elastic deformation, meaning it can be temporarily distorted or compressed and will return to its original shape once the applied force is removed.

The primary function of this biasing element is to ensure that the lens plates are securely held in place, preventing any unwanted movement that could disrupt the optical alignment relevant for high-quality imaging. The biasing element can be made from any material that exhibits suitable elasticity and durability, such as silicone, rubber, or certain plastics and metals that can be engineered to provide the desired force without permanent deformation. The design of the biasing element might include springs, elastomeric pads, or flexible clips, each tailored to apply a specific amount of pressure on the lens plates or the lens plate stack. This pressure is carefully calibrated to be strong enough to secure the lens plate stack against vibrations, shocks, or changes in orientation, but not so strong as to cause damage or undue stress to the lens plates.

The inclusion of a biasing element allows for the lens unit holder to be constructed from materials with a higher or lower thermal expansion coefficient than that of the lens plates themselves. This design consideration ensures that the lens plates are not subjected to confinement or distortion due to thermal expansion differences. As a result, the lens unit maintains optimal optical performance even under varying temperature conditions, accommodating for the thermal expansion without compromising the integrity or alignment of the lens plates. An elastically deformable biasing element not only serves to maintain the position and alignment of the lens plate stack within the lens unit holder but can also be used securing the lens unit holder body and the lens unit holder cover of the lens unit holder, particularly when they are attached via a form-fit connection. The biasing force exerted by the biasing element is ingeniously utilized to enhance the engagement between the body and the cover, ensuring a tight and secure closure. When the body and the cover are designed to attach through a form-fit mechanism - where the parts interlock based on their shapes - the addition of an elastically deformable biasing element introduces a controlled force that reinforces this connection. This force applies a constant pressure at the interface of the body and cover, augmenting the stability of the form-fit by preventing any looseness or accidental disengagement that might occur due to vibrations, impacts, or thermal expansions.

According to a preferred embodiment of the lens unit holder, the elastically deformable biasing element is elastically deformed when the lens unit holder body is fixedly coupled to the lens unit holder cover to fixedly hold the lens plate stack in compression. The biasing element, strategically positioned within the lens unit holder, can be compressed during the closing action of the lens unit holder, and its elastic force actively presses against the lens unit holder cover, pushing it into a more secure engagement with the lens unit holder body. This ensures that even under varying environmental conditions or in the face of mechanical stresses, the integrity of the enclosure is maintained, protecting the lens plate stack inside.

According to a preferred embodiment of the lens unit holder, the lens unit holder body or the lens unit holder cover comprise at least two contact surfaces, further preferably two contact surfaces, adapted to receive and align the lens plate stack, wherein the at least one elastically deformable biasing element exerts a biasing force on the lens plate stack against the at least two contact surfaces. Employing two contact surfaces to align and hold the lens plate stack within the lens unit holder offers advantages, including enhanced precision, stability, and improved optical performance. The two contact surfaces are preferably perpendicular to each other leading to an alignment of the lens plate stack in two dimensions. The lens plates preferably comprise a first mating surface that lies flat on the first contact surface when the lens plate is placed in the lens holder and a second mating surface that lies flat on the second contact surface when the lens plate is placed in the lens holder. The first mating surface and the second mating surface are further preferably perpendicular to each other. The two mating surfaces match the two contact surfaces to provide an improved alignment and stress distribution when the lens plate is securely fixed in the lens holder. In combination with the biasing element, this not only facilitates a firmer hold, reducing the potential for shifts or tilts due to external forces but also allows for more precise alignment of the first optical axes of the first lenses in the lens holder, optimizing transmission and minimizing aberrations. Moreover, the two contact surfaces provide increased contact points that distribute stress more evenly across the lens plate stack, enhancing the assembly's durability and providing better protection against environmental contaminants.

Preferably the elastically deformable biasing element comprises a first spring member configured to exert a spring force on the lens plate stack against a first one of the two contact surfaces of the lens unit holder and a second spring member configured to exert a spring force on the lens plate stack against a second one of the two contact surfaces of the lens unit holder. The inclusion of a first and a second spring member, each configured to exert a spring force on the lens plate stack against one of the two contact surfaces of the lens unit holder, can contribute to maintaining the precise alignment and stability of the lens plate stack. The first spring member applies pressure against the first contact surface, while the second spring member exerts a complementary force against the other contact surface. The first and second spring element can endow that the lens plate stack is securely held and immobilized between the two contact surfaces, effectively minimizing any lateral or axial movement that could disrupt the alignment. The advantage of employing two spring elements lies in their ability to distribute the spring force evenly across the lens plate stack, helping to provide a balanced and uniform pressure that enhances the lens assembly's overall performance. This balanced force distribution can contribute for preventing tilting or skewing of the lens plate stack, which could introduce optical aberrations and degrade image quality. Furthermore, the spring members can accommodate thermal expansion and mechanical vibrations, supporting in maintaining consistent pressure and alignment even under varying environmental conditions.

Further preferably, the elastically deformable biasing element comprises a leaf spring. A leaf spring is particularly adept at maintaining the alignment and stability of the lens plate stack within the lens assembly. Its design allows for the application of a uniform pressure across the lens plate stack, improving a securely position of each lens plate against the designated contact surfaces without tilting or shifting. This can prevent optical aberrations and maintaining high image quality.

According to a third aspect of the present invention, the object is solved by a method comprising the features of claim 11. Therefore, a method for providing a lens unit for a lens assembly according to the first aspect of the present invention is provided. The method comprises the steps of
a) providing a lens unit holder according to the second aspect of the present invention and a plurality of lens plates, each comprising a first lens;
b) arranging the plurality of lens plates one on top of each other to form a lens plate stack such that the first lenses are arranged along a first common optical axis;
c) placing the lens plate stack in the lens unit holder body;
d) attaching the lens unit holder cover to the lens unit holder body to fixedly hold the lens plate stack in between the lens unit holder body and the lens unit holder cover.

In principle, steps a) to d) should be performed in a sequential order. However, the invention is not limited to perform steps a) to d) in a sequential order. It is also possible to execute at least some of these steps multiple times and in parallel or partially overlapping in time.

Arranging the plurality of lens plates one on top of each other to form a lens plate stack such that the first lenses are arranged along a first common optical axis in step b) can include to stack the lens plates as described with the first embodiment of the present invention. Step b) can include to stack the plurality of lens plates and to align the lens plates afterwards or stacking and aligning each lens plate at once to form the lens plate stack.

The placement of the lens plate stack in step c) can include to secure the lens plate stack in a lens stack holder that presses and holds the lens plates together to keep the lens plates stacked and aligned when deploying and placing them in the lens unit holder body.

The placing of the lens plate stack in the lens unit holder body of step c) and the attaching of the lens unit holder cover to the lens unit holder body of step d) can be performed as described with the first and second embodiment of the present invention.

The process of assembling and aligning the lens unit can be simplified when lens plates are directly stacked. Without the need to individually adjust and secure each lens in its own holder, the assembly process can be faster and less prone to errors, leading to reduced manufacturing costs and time. Additionally, this method enables a modular approach, enhancing overall optical performance while minimizing installation space.

According to a preferred embodiment the method comprises in a step e) producing the first lenses in each one of the plurality of lens plates using a microfabrication technique, preferably one of the following: laser ablation, 3D printing, etching, or milling. Preferably, step e) will be performed before or after step a) and for each lens plate one after the other. The laser ablation method utilizes the focused energy of a laser to remove material from the lens plates, layer by layer, until the desired lens shape is achieved. This technique offers superior precision by allowing for the removal of material at the micron or even sub-micron level, enabling the creation of complex lens geometries with extremely fine detail and smooth surface finishes. This method can precisely control the lens shape, including the production of aspherical and freeform lenses, which are challenging to achieve with traditional molding due to the limitations in mold design and the physical constraints of the molding process itself. Additionally, laser ablation provides greater flexibility in adjusting the lens design without the need for new molds or tooling, making it ideal for custom or low-volume production where each lens may have unique specifications. This level of precision and adaptability is particularly important in applications requiring high-performance optical components, where the optical quality directly impacts system performance.

According to a preferred embodiment the method comprises in a step f) generating at least one marker in or on the plurality of lens plates to provide an alignment indicator for the arranging of the plurality of lens plates. Preferably, step f) will be performed before or after step a) and after or in parallel with step e). Integrating markers on lens plates significantly enhances the precision and efficiency of assembling the lens plate stack in step b). These markers, which can be meticulously added using methods such as laser ablation, as used in step e), serve as critical guides for the correct orientation and alignment of each lens plate within the lens plate stack. Laser ablation, in particular, allows for the precise and clean addition of markers onto the lens surface, creating high-resolution, durable markings without affecting the lens material's integrity. Especially when the first lens is produced in step e), the marker can be produced in the same laser ablation system, so that the position and alignment of the markers in relation to the first lense are the same for every lens plate. Therefore, the alignment of the first lenses of the lens plates relates to the tolerance of the placement of the lens plate in the laser ablation system.

According to a preferred embodiment the method further comprises in step g) measuring the lens plate stack to determine aberrations of the first lenses of the plurality of lens plates and in step h) producing a first corrective lens, preferably an aspherical lens, on one of the plurality of lens plates to provide a corrective lens plate to compensate for the aberrations of the first lenses of the remaining lens plates. With the arranging of the lens plates in step b), followed by the measurement of aberrations in step g) and the producing a corrective lens in step h), the method provides the ability to create a perfectly corrected lens plate stack with optimized optical performance. This method enables real-time assessment and correction of optical aberrations such as spherical aberration, chromatic aberration, and astigmatism, which can significantly affect image quality. By measuring the aberrations as the lens plates are stacked, any deviations from the desired optical performance are identified quickly. A corrective lens can then be designed and manufactured on the spot, using precision techniques, such as the laser ablation method used in step e), to exactly counteract the identified aberrations. This approach enables that each lens plate stack is custom-corrected for its specific set of optical characteristics, leading to enhanced image clarity, improved focus, and overall improved optical performance. Furthermore, this method of immediate correction minimizes the need for iterative testing and adjustments, streamlining the production process and reducing time and costs associated with traditional trial-and-error correction methods. The ability to produce a corrective lens right away and integrate it into the lens plate stack represents a significant advancement, offering a highly efficient and effective means of achieving an improved optical quality in complex optical systems.

According to a preferred embodiment the method further comprises in a step i) arranging the plurality of first lenses along the first optical axis such that the at least one marker of every one of the plurality of lens plates overlaps. The markers provide a straightforward method for identifying the proper orientation of each lens plate, facilitating precise alignment along the first common optical axis. This is relevant for maintaining optimal optical performance, as even slight misalignments can lead to significant aberrations, reduced image quality, and diminished system effectiveness. With clear markers indicating the correct alignment, the assembly process becomes faster, more efficient, and precise. This precision is vital for aligning the first lenses along the first common optical axis accurately, ensuring optimal performance by minimizing potential aberrations and maximizing image quality. The presence of these markers streamlines the assembly process, enabling both technicians and automated assembly systems to position the lens plates quickly and accurately, thereby reducing assembly times and enhancing production efficiency.

Further features, advantages and application possibilities of the present invention may be derived from the following description of exemplary embodiments and/or the figures. Thereby, all described and/or visually depicted features for themselves and/or in any combination may form an advantageous subject matter and/or features of the present invention independent of the combination in the individual claims or the dependencies. Furthermore, in the figures, same reference signs may indicate same or similar objects.
- Figure 1: schematically illustrates an exploded view of an embodiment of a lens unit according to the second aspect of the present invention.
- Figures 2a and 2b: schematically illustrate a first lens and a lens plate stack of the lens unit of figure 1.
- Figures 3 and 4: schematically illustrate an embodiment of a lens assembly according to the first aspect of the present invention.
- Figures 5a and 5b: schematically illustrate a lens plate including a first lens.
- Figure 6: schematically illustrates a method for providing the lens unit of figure 4 for the lens assembly of figures 1 and 2 according to the third aspect of the present invention.

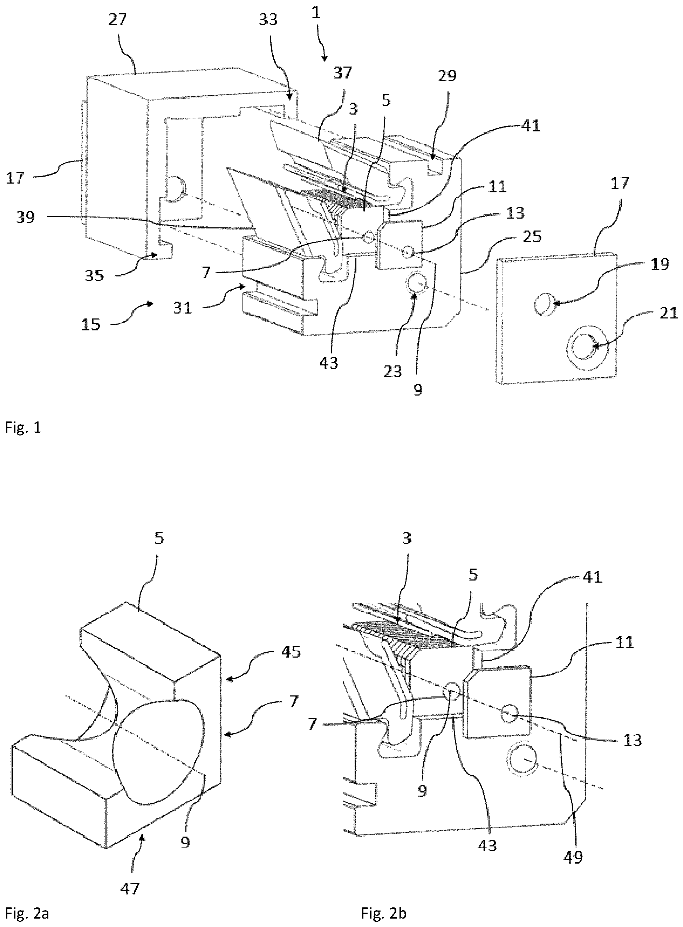

Figure 1 schematically illustrates an exploded view of a lens unit 1 according to the second aspect of the present invention. The lens unit 1 comprises a lens plate stack 3 including a plurality of lens plates 5 being stacked directly onto each other to form the lens plate stack 3. The lens plate stack 3 is illustrated in figure 2b and will be described in detail in accordance with figure 2b.

Each lens plate 5 comprises a first lens 7, wherein the first lens 7 comprises a first optical axis 9. This first lens 7 is characterized by a first optical axis 9, that represents the central line along which light or other rays travel through the first lens 7. The first optical axis 9 determines the path of the rays as they enter, pass through, and exit the first lens 7, guiding the design and alignment of the lens plate 5 to ensure that the rays are correctly focused or directed. The first lens 7 is illustrated in figure 2a and will be described in detail in accordance with figure 2a.

One of the lens plates 5 of the lens plate stack 3 of the lens unit 1 is a corrective lens plate 11. The corrective lens plate 11 comprises a first corrective lens 13 wherein the first corrective lens 13 of the corrective lens plate 11 is a corrective lens adapted to correct aberrations of the first lenses 7 of the remaining lens plates 5. By introducing a corrective lens plate 11 into the lens unit 1, it becomes feasible to create a lens unit 1 that is not only complete and corrected for optical aberrations but also modular, facilitating easy integration with other lens units to build complex optical systems.

The lens unit 1 further comprises a lens unit holder 15 being configured to hold the lens plate stack 3. The lens unit holder 15 acts as a structural component designed to hold and secure the lens plate stack 3, preventing the lens plate stack 3 from disassembling. Importantly, the lens plate stack 3 is considered a stack of lens plates 5 even in the absence of any adhesive or binding material, such as glue, to physically hold the lens plates 5 together. The lens plates 5 maintain their stacked configuration through careful placement and external support, such as the lens unit holder 15, without the need for permanent bonding. This distinction emphasizes the lens plate stack's 3 and the lens unit holder's 7 modular and flexible nature, allowing for easy adjustment, maintenance, or reconfiguration of the lens unit 1 according to changing requirements or maintenance. Such a non-permanent assembly can enhance the lens units' 1 adaptability and longevity.

The lens unit holder 15 ensures that each lens plate 5 within the lens plate stack 3 remains in its correct position, maintaining the desired optical alignment and functionality of the system. The lens unit holder 15 may be made of a material that closely matches the thermal expansion of the lens plates 5. This compatibility can be relevant for ensuring that the entire lens unit 1 expands and contracts uniformly in response to temperature changes, thereby being able to minimize the risk of optical distortions, misalignments, or mechanical stresses that could compromise the performance.

The lens unit 1 further comprises a locking plate 17 one on each end of the lens unit holder 15. The two locking plates 17 can be adapted to secure the lens plate stack 3 within the lens unit holder 15 and holding the lens plate stack 3 firmly in place in both axial directions along the first optical axis 9. To achieve this the two locking plates 17 are in contact with the lens plate stack 3 at each side of the lens plate stack 3 in an axial direction when attached to the lens unit holder 15. By doing so, it can effectively trap the lens plate stack 3 in the lens unit holder 15 to prevent any movement of the lens plates 5 or the lens plate stack 3, as well as the risk of any lens plate 5 accidentally falling out of the lens unit holder 15.

The locking plate 17 comprises a first opening 19 and a second opening 21. The first opening 21 serves as an opening which is arranged along the first optical axis 9 when the locking plate 17 is attached to the lens unit holder 15 so that the rays passing through the first lenses 7 pass the first opening 19. The second opening 21 serves as an opening for receiving a fastening element, like a screw or a bolt to attach the locking plate 17 to the lens unit holder 15. The lens unit holder 15 comprises a third opening 23 for receiving the fastening element to securely attach the locking plate 17 to the lens unit holder 15. The locking plate 17 or the lens unit holder 15 can further feature either an additional opening or another attachment element, such as projections or dowel pins, that serves as a rotation lock, holding the locking plate 17 in place and preventing it from turning.

Even though the lens unit 1 of this embodiment comprises two locking plates 17, the lens unit 1 of an alternative embodiment can comprise one locking plate 17 or even no locking plate 17. The locking plate 17 can be obsolete if the lens plate stack 3 will be held securely in the lens unit holder 15. A lens unit holder 15 without a locking plate 17 can be advantageous, as it comprises less elements leading to simpler assembly and a reduced size and weight.

The lens unit holder 15 comprises a lens unit holder body 25 adapted to receive a lens plate stack 3 and a lens unit holder cover 27 adapted to being fixedly coupled to the lens unit holder body 25. The lens unit holder body 25 and the lens unit holder cover 27 are adapted to be fixedly coupled to each other to fixedly hold the lens plate stack 3. A fixed attachment ensures that once the lens plate stack 3 is positioned in the lens unit holder body 25 and the lens unit holder cover 27 is attached to it, the lens plate stack 3 remains stable, preserving the optical alignment and sealing the interior from the outside.

The lens unit holder body 25 comprises a first attachment groove 29 and a second attachment groove 31. The lens unit holder cover 27 comprises a first attachment projection 33 and a second attachment projection 35. The attachment projections 33, 35 and the attachment grooves 29, 31 are designed as corresponding projections and grooves to smoothly fit into each other in a form-fit fashion. This form-fit connection relies on the geometric compatibility between the attachment grooves 29, 31 and the attachment projections 33, 35, where the shapes of the attachment grooves 29, 31 and projections 33, 35 are designed to interlock with each other. This type of connection is inherently stable and does not depend on external forces or additional attachment elements to maintain the attachment.

To establish the form-fit connection of the lens unit holder body 25 and the lens unit holder cover 27, the latter can be arranged on the lens unit holder body 25 by axially shifting the lens unit holder cover 27 over the lens unit holder body 25 while the first and second attachment projection 33, 35 slide into the attachment grooves 29, 31 to fixedly attach them to each other. By partially placing the lens unit holder cover 27 onto the lens unit holder body 25 by axially (along the axis) shifting the components relative to each other, the attachment projections 33, 35 slides into the attachment grooves 29, 31. This movement enables the components to interlock, effectively securing the lens unit holder cover 27 to the lens unit holder body 25 without the need for additional fastening mechanisms such as screws or adhesives. This design not only facilitates ease of assembly and disassembly but also ensures a firm and stable connection that protects the internal components, such as lens plates 5, from external environmental factors and mechanical disturbances.

The lens plate stack 3 will be fixedly held by the lens unit holder body 25 and the lens unit holder cover 27. In addition, the lens unit 1 comprises a first spring member 37 and a second spring member 39. The first spring member 37 and the second spring member 39 each comprise an elastically deformable biasing element being configured to exert a biasing force on the lens plate stack 3. The first and second spring members 37, 39 are designed to apply a consistent biasing force on the lens plate stack 3 to maintain its position and alignment within the lens unit holder 15. The first and second spring members 37, 39 leverage the properties of elastic deformation, meaning they can be temporarily distorted or compressed and will return to their original shape once the applied force is removed.

The primary function of the first and second spring member 37, 39 is to ensure that the lens plates 5 are securely held in place, preventing any unwanted movement that could disrupt the optical alignment relevant for high-quality imaging. The first and second spring member 37, 39 can be made from any material that exhibits suitable elasticity and durability, such as silicone, rubber, or certain plastics and metals that can be engineered to provide the desired force without permanent deformation.

In an alternative embodiment the lens unit holder 15 is constructed from materials with a higher thermal expansion coefficient than that of the lens plates 5 themselves, as the biasing element can compensate the thermal expansion of the lens unit holder 15. This design consideration ensures that the lens plates 5 are not subjected to confinement or distortion due to thermal expansion differences. As a result, the lens unit 1 maintains optimal optical performance even under varying temperature conditions, accommodating for the thermal expansion without compromising the integrity or alignment of the lens plates 5.

The elastically deformable spring element 37, 39 not only serves to maintain the position and alignment of the lens plate stack 3 within the lens unit holder 15 but can also be used securing the lens unit holder body 25 and the lens unit holder cover 27 of the lens unit holder 15, particularly when they are attached via the form-fit connection. The biasing force exerted by the first and second spring members 37, 39 enhances the engagement between the lens unit holder body 25 and the lens unit holder cover 27, ensuring a tight and secure closure. As the lens unit holder body 25 and the lens unit holder cover 27 are designed to attach through a form-fit mechanism the addition of the elastically deformable spring members 37, 39 introduces a controlled force that reinforces this connection. This force applies a constant pressure at the interface of the lens unit holder body 25 and lens unit holder cover 27, augmenting the stability of the form-fit by preventing any looseness or accidental disengagement that might occur due to vibrations, impacts, or thermal expansions.

The elastically deformable spring members 37, 39 are elastically deformed when the lens unit holder body 25 is fixedly coupled to the lens unit holder cover 27 to fixedly hold the lens plate stack 3 in compression. The first and second spring members 37, 39 are positioned within the lens unit holder 15 and can be compressed during the closing action of the lens unit holder 15. Its elastic force actively presses against the lens unit holder cover 27, pushing it into a more secure engagement with the lens unit holder body 25. In particular, the first spring member 37, when compressed, exerts a force on the lens unit holder cover 27 that causes the second attachment projection 35 to be pressed against an inner wall of the second attachment groove 31 in a direction perpendicular to an extension direction of the second attachment projection 35. The second spring member 39, when compressed, exerts a force on the lens unit holder cover 27 that causes the first attachment projection 33 to be pressed against an inner wall of the first attachment groove 29 in a direction perpendicular to an extension direction of the first attachment projection 33. This ensures that even under varying environmental conditions or in the face of mechanical stresses, the integrity of the enclosure is maintained, holding the lens plate stack 3 at place.

According to the present embodiment, the lens unit holder body 25 comprises a first contact surface 41 and a second contact surface 43 that are adapted to receive and align the lens plate stack 3, wherein the first spring member 37 and the second spring member 39 exert a biasing force on the lens plate stack 3 against the two contact surfaces 41, 43. Employing two contact surfaces 41, 43 to align and hold the lens plate stack 3 within the lens unit holder 15 offers advantages, including enhanced precision, stability, and improved optical performance. The first contact surface 41 and the second contact surface 43 are rectangular to each other leading to an alignment of the lens plate stack 3 in two dimensions. In combination with the first and second spring members 37, 39, this not only facilitates a firmer hold, reducing the potential for shifts or tilts due to external forces but also allows for more precise alignment of the first optical axes 9 of the first lenses 7 in the lens holder 15, optimizing transmission and minimizing aberrations. Moreover, the two contact surfaces 41, 43 provide increased contact points that distribute stress more evenly across the lens plate stack 3, enhancing the assembly's durability and providing better protection against environmental contaminants.

The first spring member 37 is configured to exert a spring force on the lens plate stack 3 against the second contact surface 41 of the lens unit holder 15 and the second spring member 39 is configured to exert a spring force on the lens plate stack 3 against the first contact surface 41 of the lens unit holder 15. The inclusion of a first and a second spring member 37, 39, each configured to exert a spring force on the lens plate stack 3 against one of the two contact surfaces 41, 43 of the lens unit holder 15, can contribute to maintaining the precise alignment and stability of the lens plate stack 3. As already mentioned, the first spring member 37 applies pressure against the second contact surface 43, while the second spring member 39 exerts a complementary force against the first contact surface 41. The first and second spring element 37, 39 can endow that the lens plate stack 3 is securely held and immobilized between the two contact surfaces 41, 43, effectively minimizing any lateral or axial movement that could disrupt the alignment. The advantage of employing two spring members 37, 39 lies in their ability to distribute the spring force evenly across the lens plate stack 3, helping to provide a balanced and uniform pressure that enhances the lens units 1 overall performance. This balanced force distribution can contribute for preventing tilting or skewing of the lens plate stack 3, which could introduce optical aberrations and degrade image quality. Furthermore, the spring members 37, 39 can accommodate thermal expansion and mechanical vibrations, supporting in maintaining consistent pressure and alignment even under varying environmental conditions.

The first and second spring members 37, 39 each comprise a leaf spring. A leaf spring is particularly adept at maintaining the alignment and stability of lens plate stack 3 within the lens unit 1. Its design allows for the application of a uniform pressure across the lens plate stack 3, improving a securely position of each lens plate 5 against the designated contact surfaces 41, 43 without tilting or shifting. This can prevent optical aberrations and maintaining high image quality.

Figure 2a and 2b schematically illustrate a first lens 7 and a lens plate stack 3 of a lens unit 1 shown in figure 1, wherein figure 2a shows the first lens 7 of a lens plate 5. In the illustrated example, the first lens 7 is formed by two concave curved surfaces at each side of the lens plate 5. In an alternative embodiment the curved surfaces comprise a convex or aspherical curved surface.

The lens plate 5 comprises at least a first mating surface 45 that lies flat on the first contact surface 41 when the lens plate 5 is placed in the lens holder 15 and a second mating surface 47 that lies flat on the second contact surface 43 when the lens plate 5 is placed in the lens holder 15. The two mating surfaces 45, 47 match the two contact surfaces 41, 43 to provide an improved alignment and stress distribution when the lens plate 5 is securely fixed in the lens holder 15.

Figure 2b shows a plurality of lens plates 5 stacked directly onto each other to provide the lens plate stack 3. Stacking the plurality of lens plates 5 directly onto each other to form the lens plate stack 3 refers to placing the plurality of lens plates 5 in direct contact with one another without any intervening space or material between them. This means that the surfaces of adjacent lens plates 5 touch each other, creating a single, continuous stack of lens plates 5. This eliminates air gaps and any other form of separation that might typically exist if the components were placed in individual holders or separated by spacers. The direct contact aims to enhance the optical pathway's efficiency and consistency, that can ensure that light or other forms of radiation pass through the stacked materials with minimal distortion, reflection, or loss of intensity. With the lens plate stack 3, it can be possible to facilitate the benefit to simplify the lens unit 1, improve the system's compactness, and potentially increase the quality of the transmitted image or signal by reducing aberrations and enhancing transmission efficiency.

A lens plate stack 3 describes an assembly of a plurality of lens plates 5 organized systematically, where each lens plate 5 is positioned either directly above or beside another, forming a coherent structure. This assembly process can result in either a vertical stack, with lens plates 5 stacked one on top of another, or a horizontal stack, where plates are aligned side by side. Once assembled, the orientation of the lens plate stack 3 -whether initially vertical or horizontal-is not fixed; it can be reoriented as needed for specific applications. This means a vertically assembled stack can be placed horizontally, and vice versa, without compromising its functionality as a stack. This approach to stacking and reorienting the lens plate stack 3 allows for a high degree of flexibility in assembling the lens unit 1.

As shown in figure 2b the lens plate stack 3 comprises the corrective lens plate 11, resulting in a modular lens unit 1 with a unique corrective lens plate 11 comprising the first corrective lens 13. This modular design principle means that each lens unit 1 is equipped with its own corrective lens plate 11, tailored to correct specific aberrations inherent to that lens unit 1. Such an arrangement ensures that every individual lens unit 1 can deliver optimal optical performance, with sharply focused, aberration-free images. The modularity aspect can particularly be advantageous, as it can allow for straightforward combination and reconfiguration of different lens units 1 to suit varying application needs, without the necessity for extensive redesign or adjustment.

The first optical axis 9 of each first lens 7 is arranged along a first common optical axis 49. In the lens unit 1 comprising multiple lens plates 5, each with its own first lens 7 characterized by a first optical axis 9, these individual optical axes 9 are meticulously aligned along a first common optical axis 49. This alignment can ensure that the entire lens unit 1 functions cohesively, directing rays along a singular, well-defined path through the lens unit 1. The concept of a first common optical axis 49 represents the central axis of the first lenses 7 of the plurality of lens plates 5. By arranging the first optical axis 9 of each lens along the first common optical axis 49, the lens unit 1 ensures that rays can travel efficiently and uniformly through each lens plate 5, being able to maintain the desired optical characteristics such as focus, intensity, and image quality. This alignment can minimize optical aberrations and maximize the lens units 1 overall performance.

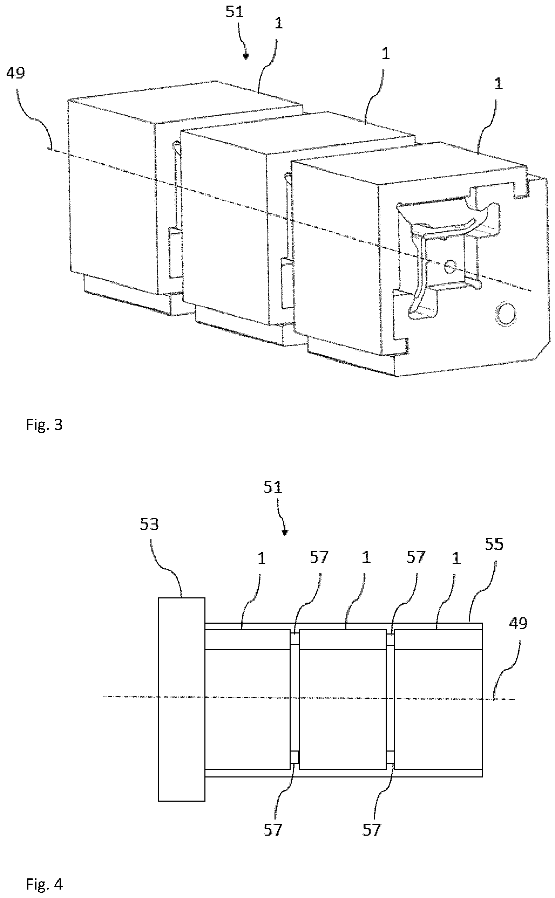

Figures 3 and 4 schematically illustrate an embodiment of a lens assembly 51 comprising a plurality of lens units 1 according to the first aspect of the present invention. figure 3 illustrates the lens assembly 51 comprising three lens units 1. Each lens unit 1 comprises a lens plate stack 3 comprising of a plurality of lens plates 5.

The lens units 1 can be understood as sub-units of the lens assembly 51, wherein in the present embodiment the lens units 1 are identical, i.e., by comprising the same amount of lens plates 5. This yields the advantage that the identical lens units 1 can be very easily combined to a lens assembly 51 comprising a plurality of lens units 1 without the need of measuring or adjust the lens units 1 or the lens assembly 51, resulting in easy assembly. Identical lens units 1 can be aligned easily, as the parameters for optimal performance are the same for all lens units 1. This can reduce the complexity of the setup and potentially increase the stability and reproducibility of the lens assembly 51.

The plurality of lens units 1 are arranged such that the first common optical axes 49 of the plurality of lens units 1 are coincident. This means that the central optical pathway, or the primary axis along which rays are directed through each lens unit 1, is aligned across all the lens units 1 within the lens assembly 51. Achieving coincidence of the first common optical axes 9 can be fundamental to ensuring that rays pass through the plurality of lens units 1 of the lens assembly 51 in a seamless, uninterrupted manner, maintaining a consistent focal point and optical quality from one lens unit 1 to the next. By aligning the first common optical axes 51 of all lens units 1, the design allows for individual lens units 1 to be easily exchanged, added, or removed with reducing the risk of disrupting the overall optical performance. As long as the new or replacement lens units 1 share the same coincident first common optical axis 51, they can be integrated into the lens assembly 51 with minimal adjustment. This capability for easy modification ensures that the lens assembly 51 can be quickly adapted to meet changing requirements or due to maintenance.

Figure 4 shows a top view of the lens assembly 51 of figure 3. The lens assembly 51 further comprises a lens assembly holder 53 being arranged to receive the plurality of lens units 1 and to align the lens units 1 such that the first common optical axes 49 of the plurality of lens units 1 are coincident. The lens assembly holder 53 can be a legacy lens holder being used to hold lenses comprising an individual lens mount.

Additionally, the lens assembly holder 53 includes a rail 55, which provides a straightforward yet precise means of arranging and securing the lens units 1. The rail 55 features a groove or dovetail design, allowing lens units 1 to be slid into place and then locked down, facilitating easy adjustments along one axis. This is particularly useful for ensuring the first common optical axes 49 of all lens units 1 are coincident.

In the lens assembly 51, each lens unit 1 further comprises an attachment element 57 to fixedly couple the lens unit 1 to another lens unit 1. The attachment element 57 is adapted to physically couple a lens unit 1 to another lens unit 1 and to fixedly hold it in place, preferably aligned along the first common optical axis 49, so that a movement of both lens units 1 relative to each other will be prevented. The attachment element 57 may take various forms, including clamps, springs, screws, bayonet mounts, or magnetic couplings, each chosen based on the specific requirements of the lens assembly, including the need for quick assembly/disassembly, vibration resistance, and long-term stability. The attachment element 57 can also be designed to allow for slight adjustments to be made post-assembly, ensuring that the lens units 1 can be fine-tuned to achieve perfect alignment along the common first optical axis 49. By enabling the fixed coupling of lens units 1 in a manner that aligns them accurately along the first common optical axes 49 coinciding, the attachment element 57 ensures that rays travel through the lens assembly 51 as intended, with minimal loss or distortion.

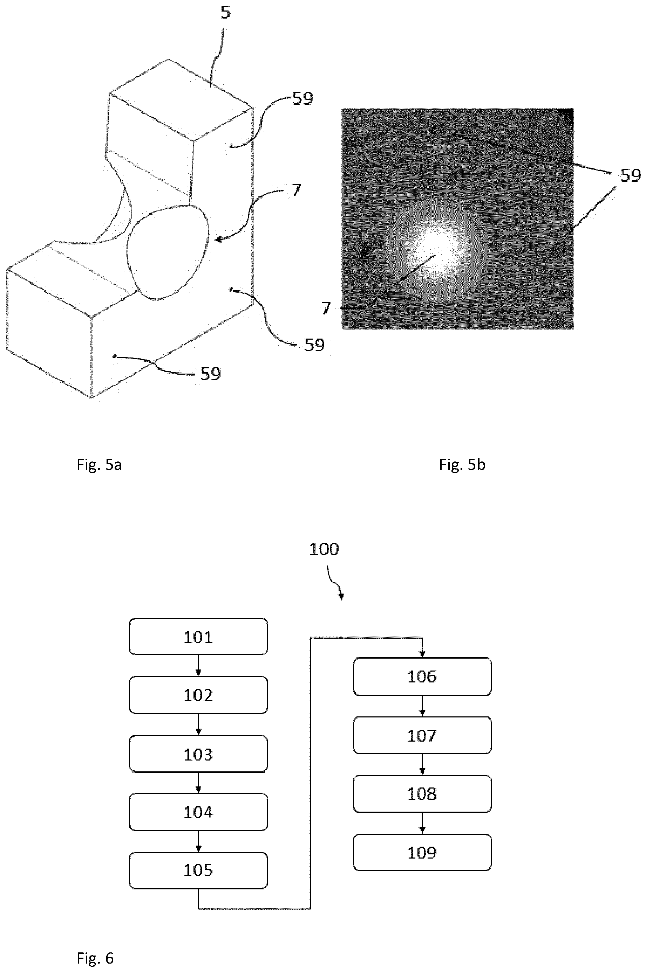

Figures 5a and 5b schematically illustrate a lens plate 5 including a first lens 7, wherein figure 5a shows a lens plate 5, that comprises a plurality of markers 59 arranged on the lens plate 5. Integrating markers 59 on lens plates 5 significantly enhances the precision and efficiency of assembling the lens plate stack 3. These markers 59, which can be meticulously added using methods such as laser ablation, serve as guides for the correct orientation and alignment of each lens plate 5 within the lens plate stack 3. Laser ablation, in particular, allows for the precise and clean addition of markers 59 onto the lens plate 5 surface, creating high-resolution, durable markings without affecting the lens material's integrity. Figure 5b shows an x-ray image of a plurality of lens plates 5 being stacked onto each other, wherein each lens plate 5 comprises a plurality of markers 59. As shown in figure 5b the plurality of lens plates 5 are aligned such that all the plurality of markers 59 of each lens plate 5 overlap.

Figure 6 schematically illustrates a method 100 for providing the lens unit 1 of figure 1 for the lens assembly 51 of figures 3 and 4 according to the third aspect of the present invention. The method 100 comprises in a first step 101 providing a lens unit holder 15 according to the second aspect of the present invention and a plurality of lens plates 5, each comprising a first lens 7.

The method 100 comprises in a second step 102 producing the first lenses 7 in each one of the plurality of lens plates 5 using a microfabrication technique, such as laser ablation, 3D printing, milling, or an etching method. The laser ablation method utilizes the focused energy of a laser to remove material from the lens plates 5, layer by layer, until the desired lens shape is achieved. This technique offers superior precision by allowing for the removal of material at the micron or even sub-micron level, enabling the creation of complex lens geometries with extremely fine detail and smooth surface finishes. This method 100 can precisely control the lens shape, including the production of aspherical and freeform lenses, which are challenging to achieve with traditional molding due to the limitations in mold design and the physical constraints of the molding process itself. Additionally, laser ablation provides greater flexibility in adjusting the lens design without the need for new molds or tooling, making it ideal for custom or low-volume production where each lens may have unique specifications. This level of precision and adaptability is particularly important in applications requiring high-performance optical components, where the optical quality directly impacts system performance.

The method 100 comprises in a third step 103 generating at least one marker 59 in or on the plurality of lens plates 5 to provide an alignment indicator for the arranging of the plurality of lens plates 5.

The method 100 further comprises in a fourth step 104 arranging the plurality of first lenses 7 along the first optical axis 9 such that the at least one marker 59 of every one of the plurality of first lenses 7 overlaps. The markers 59 provide a straightforward method for identifying the proper orientation of each lens plate 5, facilitating precise alignment along the first common optical axis 49. This is relevant for maintaining optimal optical performance, as even slight misalignments can lead to significant aberrations, reduced image quality, and diminished system effectiveness. With clear markers 59 indicating the correct alignment, the assembly process becomes faster, more efficient and precise. This precision is vital for aligning the first lenses 7 along the first common optical axis 49 accurately, ensuring optimal performance by minimizing potential aberrations and maximizing image quality. The presence of these markers 59 streamlines the assembly process, enabling both technicians and automated assembly systems to quickly and accurately position the lens plates 5, thereby reducing assembly times and enhancing production efficiency.

Further the method 100 comprises in a fifth step 105 arranging the plurality of lens plates 5 one on top of each other to form a lens plate stack 3 such that the first lenses 7 are arranged along a first common optical axis 49. Arranging the plurality of lens plates 5 one on top of each other to form a lens plate stack 3 such that the first lenses 7 are arranged along a first common optical axis 49 can include to stack the lens plates 5 as described with the reference to figures 1 and 2b. The fifth step 105 can include to stack the plurality of lens plates 5 and to align the lens plates 5 afterwards or stacking and aligning each lens plate 5 at once to form the lens plate stack 3.

The method 100 illustrates a sixth step 106 comprising measuring the lens plate stack 3 to determine aberrations of the first lenses 7 of the plurality of lens plates 5 and in a seventh step 107 producing the first corrective lens 13, preferably an aspherical lens, on one of the plurality of lens plates 5 to provide a corrective lens plate 11 to compensate for the aberrations of the first lenses 7 of the remaining lens plates 5. With the arranging of the lens plates 5 in the fifth step 105, followed by the measurement of aberrations in the sixth step 106 and the producing a corrective lens in the seventh step, the method 100 provides the ability to create a perfectly corrected lens plate stack 3 with optimized optical performance. This method 100 enables real-time assessment and correction of optical aberrations such as spherical aberration, chromatic aberration, and astigmatism, which can significantly affect image quality. By measuring the aberrations as the lens plates 5 are stacked, any deviations from the desired optical performance are identified quickly. A corrective lens 11 can then be designed and manufactured on the spot, using precision techniques, such as the laser ablation method used in the second step 102, to exactly counteract the identified aberrations. This approach enables that each lens plate stack 3 is custom-corrected for its specific set of optical characteristics, leading to enhanced image clarity, improved focus, and overall improved optical performance. Furthermore, this method 100 including immediate correction minimizes the need for iterative testing and adjustments, streamlining the production process and reducing time and costs associated with traditional trial-and-error correction methods. The ability to produce a corrective lens 11 right away and integrate it into the lens plate stack 3 represents a significant advancement, offering a highly efficient and effective means of achieving an improved optical quality in complex optical systems.

Further the method 100 comprises in an eighth step 108 placing the lens plate stack 3 in the lens unit holder body 25 and in a ninth step 109 attaching the lens unit holder cover 27 to the lens holder body 25 to fixedly hold the lens plate stack 3 in between the lens unit holder body 25 and the lens unit holder cover 27. The placing of the lens plate stack 3 in the lens unit holder body 25 of the eighth step 108 and the attaching of the lens unit holder cover 27 to the lens unit holder body 25 of the ninth step 109 can be performed as described with the first and second embodiment of the present invention.

The process of assembling and aligning the lens unit 1 can be simplified when lens plates 5 are directly stacked. Without the need to individually adjust and secure each lens in its own holder, the assembly process can be faster and less prone to errors, leading to reduced manufacturing costs and time. Additionally, this method 100 enables a modular approach, enhancing overall optical performance while minimizing installation space.

### Reference signs

- 1: lens unit
- 3: lens plate stack
- 5: lens plate
- 7: first lens
- 9: first optical axis
- 11: corrective lens plate
- 13: first corrective lens
- 15: lens unit holder
- 17: locking plate
- 19: first opening
- 21: second opening
- 23: third opening
- 25: lens unit holder body
- 27: lens unit holder cover
- 29: first attachment groove
- 31: second attachment groove
- 33: first attachment projection
- 35: second attachment projection
- 37: first spring member
- 39: second spring member
- 41: first contact surface
- 43: second contact surface
- 45: first mating surface
- 47: second mating surface
- 49: first common optical axis
- 51: lens assembly
- 53: lens assembly holder
- 55: rail
- 57: attachment element
- 59: marker

- 100: method
- 101: first step
- 102: second step
- 103: third step
- 104: fourth step
- 105: fifth step
- 106: sixth step
- 107: seventh step
- 108: eighth step
- 109: ninth step

## Claims

1. A lens assembly (51) for X-rays or gamma rays comprising a plurality of removable lens units (1),
wherein each lens unit (1) comprises:
a plurality of lens plates (5) being stacked directly onto each other to form a lens plate stack (3); and
a lens unit holder (15) being configured to hold the lens plate stack (3);
wherein each lens plate (5) comprises a first lens (7), the first lens (7) comprising a first optical axis (9); and
wherein the first optical axis (9) of each first lens (7) is arranged along a first common optical axis (49)
wherein the plurality of lens units (1) are arranged such that the first common optical axes (49) of the plurality of lens units (1) are coincident.

2. The lens assembly (51) of claim 1, wherein for each of the lens unit (1) one of the lens plates (5) is a corrective lens plate (11), wherein the first lens (7) of the corrective lens plate (11) is a first corrective lens (13) adapted to correct aberrations of the first lenses (7) of the remaining lens plates (5).

3. The lens assembly (51) of claim 2, wherein the first corrective lens (13) is an aspherical lens.

4. The lens assembly (51) of one of the preceding claims, further comprising:
a lens assembly holder (53) being arranged to receive the plurality of lens units (1) and to align the lens units (1) such that the first common optical axes (49) of the plurality of lens units (1) are coincident.

5. The lens assembly (51) of one of the preceding claims,
wherein each lens unit (1) further comprises:
at least one locking plate (17) being fixedly attached to the lens unit holder (15) on a first end of the lens unit holder (15).

6. The lens assembly (51) of one of the preceding claims, wherein each lens unit (1) further comprises:
at least one attachment element (57) to fixedly couple the lens unit (1) to another lens unit (1).

7. A lens unit holder (15) for a lens assembly (51) for X-rays or gamma rays according to any of the preceding claims,
the lens unit holder (15) being configured to hold a plurality of lens plates (5) comprising:
a lens unit holder body (25) adapted to receive a lens plate stack (3) formed by directly stacking the plurality of lens plates (5) one on top of the other; and
a lens unit holder cover (27) adapted to being fixedly coupled to the lens unit holder body (25),
wherein the lens unit holder body (25) and the lens unit holder cover (27) are adapted to be fixedly coupled to each other to fixedly hold the lens plate stack (3).

8. The lens unit (1) holder of claim 7 further comprising:
at least one elastically deformable biasing element (37, 39) being configured to exert a biasing force on the lens plate stack (3).

9. The lens unit (1) holder of claim 8, wherein the elastically deformable biasing element (37, 39) is elastically deformed when the lens unit holder body (25) is fixedly coupled to the lens unit holder cover (27) to fixedly hold the lens plate stack (3) in compression.

10. The lens unit (1) holder of any one of the claims 7 to 9, wherein the lens unit holder body (25) or the lens unit holder cover (27) comprise at least two contact surfaces (41, 43) adapted to receive and align the lens plate stack (3), wherein the at least one elastically deformable biasing element (37, 39) exerts a biasing force on the lens plate stack (3) against the at least two contact surfaces (41, 43).

11. A method (100) for providing a lens unit (1) for a lens assembly (51) for X-rays or gamma rays according to any of claims 1 to 6, the method (100) comprising the steps of:
a) providing (101) a lens unit (1) holder according to any of claims 7 to 10 and a plurality of lens plates (5), each comprising a first lens (7);
b) arranging (105) the plurality of lens plates (5) one on top of each other to form a lens plate stack (3) such that the first lenses (7) are arranged along a first common optical axis (49);
c) placing (108) the lens plate stack (3) in the lens unit holder body (25);
d) attaching (109) the lens unit holder cover (27) to the lens unit holder body (25) to fixedly hold the lens plate stack (3) in between the lens unit holder body (25) and the lens unit holder cover (27).

12. The method (100) of claim 11, wherein the method (100) further comprises:
e) producing (102) the first lenses (7) in each one of the plurality of lens plates (5) using a microfabrication technique, preferably one of the following: laser ablation, 3D printing, etching, or milling.

13. The method (100) of one of the claims 11 and 12, wherein the method (100) further comprises:
f) generating (103) at least one marker (59) in or on the plurality of lens plates (5) to provide an alignment indicator for the arranging of the plurality of lens plates (5).

14. The method (100) of any one of the claims 11 to 13, wherein the method (100) further comprises:
g) measuring (106) the lens plate stack (3) to determine aberrations of the first lenses (7) of the plurality of lens plates (5); and
h) producing (107) a first corrective lens (13), preferably an aspherical lens, on one of the plurality of lens plates (5) to provide a corrective lens plate (11) to compensate for the aberrations of the first lenses (7) of the remaining lens plates (5).

15. The method (100) of any one of the claims 11 to 14, wherein step h) comprises:
i) arranging (104) the plurality of first lenses (7) along the first optical axis (9) such that the at least one marker (59) of every one of the plurality of lens plates (5) overlaps.

## Patentansprüche

1. Linsenbaugruppe (51) für Röntgen- oder Gammastrahlen, die mehrere herausnehmbare Linseneinheiten (1) umfasst, wobei jede Linseneinheit (1) Folgendes umfasst:
mehrere Linsenplatten (5), die direkt aufeinandergestapelt sind und so einen Linsenplattenstapel (3) bilden, und
einen Linseneinheithalter (15), der so konfiguriert ist, dass er den Linsenplattenstapel (3) hält,
wobei jede Linsenplatte (5) eine erste Linse (7) umfasst, die eine erste optische Achse (9) umfasst, und
wobei die erste optische Achse (9) jeder ersten Linse (7) eine erste gemeinsame optische Achse (49) entlang angeordnet ist,
wobei die mehreren Linseneinheiten (1) so angeordnet sind, dass ihre ersten gemeinsamen optischen Achsen (49) der mehreren Linseneinheiten (1) zusammenfallen.

2. Linsenbaugruppe (51) nach Anspruch 1, wobei für jede der Linseneinheiten (1) eine der Linsenplatten (5) als Korrekturlinsenplatte (11) dient, wobei es sich bei der ersten Linse (7) der Korrekturlinsenplatte (11) um eine erste Korrekturlinse (13) handelt, die so ausgelegt ist, dass sie Abbildungsfehler der ersten Linsen (7) der restlichen Linsenplatten (5) korrigiert.

3. Linsenbaugruppe (51) nach Anspruch 2, wobei es sich bei der ersten Korrekturlinse (13) um eine asphärische Linse handelt.

4. Linsenbaugruppe (51) nach einem der vorhergehenden Ansprüche, die ferner Folgendes umfasst:
einen Linsenbaugruppenhalter (53), der so angeordnet ist, dass er die mehreren Linseneinheiten (1) aufnehmen und so ausrichten kann, dass ihre ersten gemeinsamen optischen Achsen (49) zusammenfallen.

5. Linsenbaugruppe (51) nach einem der vorhergehenden Ansprüche, wobei jede Linseneinheit (1) ferner Folgendes umfasst:
mindestens eine Sicherungsplatte (17), die an einem ersten Ende des Linseneinheithalters (15) fest an diesem angebracht ist.

6. Linsenbaugruppe (51) nach einem der vorhergehenden Ansprüche, wobei jede Linseneinheit (1) ferner Folgendes umfasst:
mindestens ein Befestigungselement (57) zum festen Koppeln der Linseneinheit (1) mit einer anderen Linseneinheit (1).

7. Linseneinheithalter (15) für eine Linsenbaugruppe (51) für Röntgen- oder Gammastrahlen nach einem der vorhergehenden Ansprüche, wobei der Linseneinheithalter (15) so konfiguriert ist, dass er mehrere Linsenplatten (5) hält, und Folgendes umfasst:
einen Linseneinheithalter-Hauptteil (25), der so ausgelegt ist, dass er einen Linsenplattenstapel (3) aufnimmt, der durch direktes Aufeinanderstapeln der mehreren Linsenplatten (5) gebildet wird, und
eine Linseneinheithalter-Abdeckung (27), die so ausgelegt ist, dass sie fest mit dem Linseneinheithalter-Hauptteil (25) gekoppelt werden kann,
wobei der Linseneinheithalter-Hauptteil (25) und die Linseneinheithalter-Abdeckung (27) so ausgelegt sind, dass sie fest aneinandergekoppelt werden können und so den Linsenplattenstapel (3) festhalten.

8. Halter für eine Linseneinheit (1) nach Anspruch 7, der ferner Folgendes umfasst:
mindestens ein elastisch verformbares Vorspannelement (37, 39), das so konfiguriert ist, dass es eine Vorspannkraft auf den Linsenplattenstapel (3) ausübt.

9. Halter für eine Linseneinheit (1) nach Anspruch 8, wobei das elastisch verformbare Vorspannelement (37, 39) elastisch verformt wird, wenn der Linseneinheithalter-Hauptteil (25) fest mit der Linseneinheithalter-Abdeckung (27) gekoppelt ist und so den Linsenplattenstapel (3) unter Druck festhält.

10. Halter für eine Linseneinheit (1) nach einem der Ansprüche 7 bis 9, wobei der Linseneinheithalter-Hauptteil (25) oder die Linseneinheithalter-Abdeckung (27) mindestens zwei Kontaktflächen (41, 43) umfasst, die so ausgelegt sind, dass sie den Linsenplattenstapel (3) aufnehmen und ausrichten können, wobei das mindestens eine elastisch verformbare Vorspannelement (37, 39) an den mindestens zwei Kontaktflächen (41, 43) eine Vorspannkraft auf den Linsenplattenstapel (3) ausübt.

11. Verfahren (100) zum Bereitstellen einer Linseneinheit (1) für eine Linsenbaugruppe (51) für Röntgen- oder Gammastrahlen nach einem der Ansprüche 1 bis 6, wobei das Verfahren (100) folgende Schritte umfasst:
a) Bereitstellen (101) eines Halters für eine Linseneinheit (1) nach einem der Ansprüche 7 bis 10 und mehrerer Linsenplatten (5), die jeweils eine erste Linse (7) umfassen,
b) Anordnen (105) der mehreren Linsenplatten (5) übereinander, so dass ein Linsenplattenstapel (3) gebildet wird und die ersten Linsen (7) eine erste gemeinsame optische Achse (49) entlang angeordnet sind,
c) Platzieren (108) des Linsenplattenstapels (3) in dem Linseneinheithalter-Hauptteil (25),
d) derartiges Anbringen (109) der Linseneinheithalter-Abdeckung (27) am Linseneinheithalter-Hauptteil (25), dass der Linsenplattenstapel (3) zwischen dem Linseneinheithalter-Hauptteil (25) und der Linseneinheithalter-Abdeckung (27) festgehalten wird.

12. Verfahren (100) nach Anspruch 11, wobei das Verfahren (100) ferner Folgendes umfasst:
e) Herstellen (102) der ersten Linsen (7) in jeder der mehreren Linsenplatten (5) mithilfe einer Mikroproduktionstechnik, vorzugsweise einer der folgenden: Laserabtragung, 3D-Druck, Ätzen oder Fräsen.

13. Verfahren (100) nach einem der Ansprüche 11 und 12, wobei das Verfahren (100) ferner Folgendes umfasst:
f) Erzeugen (103) mindestens einer Markierung (59) in oder an den mehreren Linsenplatten (5) zwecks Bereitstellens eines Ausrichtungsindikators für das Anordnen der mehreren Linsenplatten (5).

14. Verfahren (100) nach einem der Ansprüche 11 bis 13, wobei das Verfahren (100) ferner Folgendes umfasst:
g) Messen (106) des Linsenplattenstapels (3) zwecks Ermittelns von Abbildungsfehlern der ersten Linsen (7) der mehreren Linsenplatten (5) und
h) Herstellen (107) einer ersten Korrekturlinse (13), vorzugsweise einer asphärischen Linse, an einer der mehreren Linsenplatten (5) zwecks Bereitstellens einer Korrekturlinsenplatte (11) zum Ausgleichen der Abbildungsfehler der ersten Linsen (7) der restlichen Linsenplatten (5).

15. Verfahren (100) nach einem der Ansprüche 11 bis 14, wobei Schritt h) Folgendes umfasst:
i) derartiges Anordnen (104) der mehreren ersten Linsen (7) entlang der optischen Achse (9), dass die mindestens eine Markierung (59) jeder der mehreren Linsenplatten (5) übereinanderliegen.

## Revendications

1. Ensemble de lentilles (51) pour rayons X ou rayons gamma comprenant une pluralité d'unités de lentilles amovibles (1),
dans lequel chaque unité de lentilles (1) comprend :
une pluralité de plaques de lentille (5) empilées directement les unes sur les autres pour former une pile de plaques de lentille (3) ; et
un porte-unité de lentilles (15) configuré pour supporter la pile de plaques de lentille (3) ;
dans lequel chaque plaque de lentille (5) comprend une première lentille (7), la première lentille (7) comprenant un premier axe optique (9) ; et
dans lequel le premier axe optique (9) de chaque première lentille (7) est agencé le long d'un premier axe optique commun (49),
dans lequel les unités de la pluralité d'unités de lentilles (1) sont agencées de telle sorte que les premiers axes optiques communs (49) de la pluralité d'unités de lentilles (1) coïncident.

2. Ensemble de lentilles (51) selon la revendication 1 dans lequel, pour chaque unité de lentilles (1), l'une des plaques de lentille (5) est une plaque de lentille correctrice (11), dans lequel la première lentille (7) de la plaque de lentille correctrice (11) est une première lentille correctrice (13) adaptée pour corriger les aberrations des premières lentilles (7) des plaques de lentille restantes (5).

3. Ensemble de lentilles (51) selon la revendication 2, dans lequel la première lentille correctrice (13) est une lentille asphérique.

4. Ensemble de lentilles (51) selon l'une des revendications précédentes, comprenant en outre :
un porte-ensemble de lentilles (53) agencé pour recevoir la pluralité d'unités de lentilles (1) et pour aligner les unités de lentilles (1) de telle sorte que les premiers axes optiques communs (49) de la pluralité d'unités de lentilles (1) coïncident.

5. Ensemble de lentilles (51) selon l'une des revendications précédentes,
dans lequel chaque unité de lentilles (1) comprend en outre :
au moins une plaque de verrouillage (17) attachée de manière fixe au porte-unité de lentilles (15), à une première extrémité du porte-unité de lentilles (15).

6. Ensemble de lentilles (51) selon l'une des revendications précédentes, dans lequel chaque unité de lentilles (1) comprend en outre :
au moins un élément d'attache (57) pour coupler l'unité de lentilles (1) de manière fixe à une autre unité de lentilles (1).

7. Porte-unité de lentilles (15) destiné à un ensemble de lentilles (51) pour rayons X ou rayons gamma selon l'une quelconque des revendications précédentes,
le porte-unité de lentilles (15) étant configuré pour supporter une pluralité de plaques de lentille (5) comprenant :
un corps de porte-unité de lentilles (25) adapté pour recevoir une pile de plaques de lentille (3) formée par un empilement direct de la pluralité de plaques de lentille (5) les unes sur les autres ; et
un couvercle de porte-unité de lentilles (27) adapté pour être couplé de manière fixe au corps de porte-unité de lentilles (25),
dans lequel le corps de porte-unité de lentilles (25) et le couvercle de porte-unité de lentilles (27) sont adaptés pour être couplés de manière fixe l'un à l'autre afin de supporter la pile de plaques de lentille (3) de manière fixe.

8. Porte-unité de lentilles (1) selon la revendication 7, comprenant en outre :
au moins un élément de sollicitation élastiquement déformable (37, 39) configuré pour exercer une force de sollicitation sur la pile de plaques de lentille (3).

9. Porte-unité de lentilles (1) selon la revendication 8, dans lequel l'élément de sollicitation élastiquement déformable (37, 39) est déformé élastiquement quand le corps de porte-unité de lentilles (25) est couplé de manière fixe au couvercle de porte-unité de lentilles (27) pour supporter la pile de plaques de lentille (3) en compression de manière fixe.

10. Porte-unité de lentilles (1) selon l'une quelconque des revendications 7 à 9, dans lequel le corps de porte-unité de lentilles (25) ou le couvercle de porte-unité de lentilles (27) comprend au moins deux surfaces de contact (41, 43) adaptées pour recevoir et aligner la pile de plaques de lentille (3), dans lequel ledit au moins un élément de sollicitation élastiquement déformable (37, 39) exerce une force de sollicitation sur la pile de plaques de lentille (3) contre lesdites au moins deux surfaces de contact (41, 43).

11. Procédé (100) destiné à fournir une unité de lentilles (1) destinée à un ensemble de lentilles (51) pour rayons X ou rayons gamma selon l'une quelconque des revendications 1 à 6, le procédé (100) comprenant les étapes suivantes :
a) fourniture (101) d'un porte-unité de lentilles (1) selon l'une quelconque des revendications 7 à 10 et d'une pluralité de plaques de lentille (5) comprenant chacune une première lentille (7) ;
b) agencement (105) de la pluralité de plaques de lentille (5) les unes sur les autres pour former une pile de plaques de lentille (3) de telle sorte que les premières lentilles (7) soient agencées le long d'un premier axe optique commun (49) ;
c) placement (108) de la pile de plaques de lentille (3) dans le corps de porte-unité de lentilles (25) ;
d) attache (109) du couvercle de porte-unité de lentilles (27) au corps de porte-unité de lentilles (25) pour supporter la pile de plaques de lentille (3) de manière fixe entre le corps de porte-unité de lentilles (25) et le couvercle de porte-unité de lentilles (27).

12. Procédé (100) selon la revendication 11, dans lequel le procédé (100) comprend en outre :
e) la production (102) des premières lentilles (7) dans chaque plaque de la pluralité de plaques de lentille (5) en utilisant une technique de microfabrication, et de préférence l'une des techniques suivantes : ablation laser, impression 3D, gravure et fraisage.

13. Procédé (100) selon l'une des revendications 11 et 12, dans lequel le procédé (100) comprend en outre :
f) la génération (103) d'au moins un marqueur (59) dans ou sur la pluralité de plaques de lentille (5) afin de fournir un indicateur d'alignement pour l'agencement de la pluralité de plaques de lentille (5).

14. Procédé (100) selon l'une quelconque des revendications 11 à 13, dans lequel le procédé (100) comprend en outre :
g) la mesure (106) de la pile de plaques de lentille (3) afin de déterminer les aberrations des premières lentilles (7) de la pluralité de plaques de lentille (5) ; et
h) la production (107) d'une première lentille correctrice (13), de préférence une lentille asphérique, sur une plaque de la pluralité de plaques de lentille (5) pour fournir une plaque de lentille correctrice (11) afin de compenser les aberrations des premières lentilles (7) des plaques de lentille restantes (5).

15. Procédé (100) selon l'une quelconque des revendications 11 à 14, dans lequel l'étape h) comprend :
i) l'agencement (104) de la pluralité de premières lentilles (7) le long du premier axe optique (9) de sorte que ledit au moins un marqueur (59) de chaque plaque de la pluralité de plaques de lentille (5) présente un chevauchement.
